Europäisches Patentamt

European Patent Office

Office européen des brevets

(11) Publication number: 0 186 474
A2

# (12) EUROPEAN PATENT APPLICATION

(21) Application number: 85309352.4

(22) Date of filing: 20.12.85

(51) Int. Cl.4: B01J 8/00 , C10G 35/04

(30) Priority: 27.12.84 US 686855

(43) Date of publication of application:
02.07.86 Bulletin 86/27

(84) Designated Contracting States:
BE DE FR GB IT NL

(71) Applicant: MOBIL OIL CORPORATION
150 East 42nd Street
New York New York 10017(US)

(72) Inventor: Daviduk, Nicholas
14 Blue Spruce Drive
Pennington New Jersey 08534(US)
Inventor: Owen, Hartley
5 Riverview Terrace
Belle Mead New Jersey 08502(US)
Inventor: Wright, Bernard Stanley
13 Shagbark Lane
East Windsor New Jersey 08520(US)

(74) Representative: West, Alan Harry
Mobil Court 3 Clements Inn
London WC2A 2EB(GB)

(54) Method and apparatus for sequential rotation of reactors.

(57) A multi-reactor hydrocarbon catalytic conversion system includes at least three reactors, a feed source and apparatus for sequentially backwardly rotating the reactors during operation. In each cycle, at least one reactor is regenerated, while other reactors operate in process mode positions. A reactor with regenerated catalyst is in a terminal position, and a reactor having least fresh catalyst is first. The first reactor receives fresh feed while the terminal reactor, having freshest catalyst, receives the partially converted feed. Method and apparatus are provided for rotation of the reactors, without the necessity of stopping operation of the catalytic conversion process while the shifting of the reactors is being performed. Heat exchangers are provided to control the inlet temperature of effluent provided to downstream reactors. The heat exchangers can occupy fixed process positions or, alternatively, can swing with the reactors in the sequential rotation process.

EP 0 186 474 A2

## METHOD AND APPARATUS FOR SEQUENTIAL ROTATION OF REACTORS.

This invention relates to a catalytic conversion process and apparatus using plural reactors arranged in series.

Many catalytic conversion processes operate with several reactors rather than only one reactor. One reason for using multi-reactor systems is that often adequate catalyst volume cannot be contained in a single vessel. Moreover, it is often more economical to install several small vessels rather than one very large vessel. Additionally, process flexibility may be increased with multiple reactors so that different operating conditions can be used in each reactor, thus resulting in different product yields, variations in catalyst aging or ultimate life, changes in conversion of feed, or combinations of all the above.

Multiple reactors may be used in two basic flow configurations. Reactors may be manifolded to operate in parallel or series flow. However, reactors can only be practically used in parallel flow arrangement if the feedstock can be economically converted in a single pass through a catalyst bed. When the catalyst in the reactors requires frequent replacement or reactivation, an extra reactor may be installed and throughput can remain constant during catalyst replacement or reactivation.

Series flow operation is generally used when a series of reactions take place across the catalyst beds, usually under endothermic or exothermic conditions. To attain the desired yield pattern, heating/cooling units are provided between reactors to perform inter-reactor heating or cooling. An example of heating between reactors in series flow is the catalytic reforming of naphtha, an endothermic process. Furnaces are used between reactors to heat reactor effluent to the desired inlet temperature of the downstream reactor. In exothermic processes, reactor effluent may be cooled by using heat exchange or by direct cooling using gaseous or liquid quench streams. The catalyst beds may be in separate reactors or they may be placed in one large vessel with mechanical separation between the beds.

Some processes may use a combination of reactors in parallel flow configuration along with reactors in series flow, or the reverse combination. This is often done when two catalysts are used in a process. The initial catalyst may remove impurities or partially convert the feedstock, with the second catalyst completing the reaction. U. S. Patent No. 3,998,899 discloses a fixed bed methanol-to-gasoline (MTG) process, wherein two catalysts are used in a process. In the MTG process, the first catalyst may be in one reactor or in two or more reactors operating in parallel flow with the effluent flowing in series to one or more reactors in parallel flow.

Another variation of series flow is used in a cyclic catalytic reforming process. Due to the need to reactivate the catalyst every few days, an extra, or swing reactor, is used to replace the reactor undergoing regeneration. Cyclic reformer operation with four reactors in series flow and one swing reactor as follows is known. Any reactor in flow position from one to four may be removed from service for regeneraton and be replaced by the swing reactor for process service. The plant piping allows the swing reactor to serve in any of the four process positions, and also undergo regeneration in the swing position. The process reactors always remain fixed in their process position unless they are in the regeneration position. In summary, each of the normal process reactors remain in a fixed process position except when it undergoes regeneration. The swing reactor temporarily replaces a process reactor when it undergoes regeneration.

In an olefins-to-distillate process (OD), the most active catalyst is optimally located in the third process position of a three reactor system operating in a series flow arrangement, and the least active catalyst is optimally located in the first or initial feed reactor in order to attain the highest conversion of olefins to products, with one or more intermediate reactors assuming process positions such that reactors with successively more active catalyst are in process positions progressively further downstream in the process sequence.

It would be beneficial if a better way were available to sequentially rotate three or more reactors to allow the most fresh, or newly regenerated, catalyst to be in the last process flow positon and the least active, or most aged, catalyst to be in the first position, with one reactor in the regeneration mode. Ideally, any reactor could occupy any process mode position as well as a regeneration position. Sequential backward rotation of reactors arranged in series flow, wherein heat integration integrity is maintained during each successive cycle, would also be beneficial.

A process and apparatus wherein each reactor feed/effluent exchanger remains in a fixed process position or alternatively swings along with the reactors, and which requires a simple rotation procedure, a minimum of components, and is fully automatic, thus providing rapid sequential reactor swings, would greatly improve existing swing reactor systems.

Accordingly, the present invention provides a method of sequentially backwardly rotating at least three reactors, such that in each cycle the reactors are positioned so that one reactor operates in regeneration mode while other reactors operate in serial process mode, characterized by: (a) initiating a new cycle by placing a reactor with regenerated catalyst in a last process position of a train of at least two reactors operating in series flow such that the reactor with regenerated catalyst is in parallel with a reactor which in an immediately preceding cycle occupied the last process position alone; (b) isolating from the process the reactor which in the preceding cycle occupied the last process position; (c) placing the isolated reactor in parallel with a reactor which in the preceding cycle occupied an adjacent upstream process position to the last process position; (d) isolating from the process the reactor which in the immediately preceding cycle occupied the adjacent upstream process position; (e) regenerating the reactor isolated in step (d) provided that the adjacent downstream position of the reactor isolated in step (d) is a first process position; and (f) sequentially placing the reactor isolated in step (b) in parallel operation with the reactor which in an immediately preceding cycle occupied an adjacent upstream process position to the last process position and isolating from the process the reactor which in the immediately preceding cycle occupied the adjacent upstream position provided that the adjacent upstream position of the reactor isolated in step (d) is an intermediate process position.

In another embodiment, the present invention provides a method of sequentially backwardly rotating at least three reactors, such that in each sequence or cycle the reactors are positioned so that one reactor is in regenerated while other reactors operate in serial process mode, characterized by: (a) placing a reactor with regenerated catalyst in a last process position of a train of at least two reactors operating in series such that the reactor with regenerated catalyst is in parallel with a reactor which in an immediately preceding cycle was the terminal reactor; (b) isolating from the process the terminal reactor; (c) sequentially placing adjacent downstream reactors in parallel operation with adjacent upstream reactors and isolating the adjacent upstream reactors until an adjacent upstream reactor is encountered which was the first reactor in the preceding cycle; (d) isolating from the process the first reactor; and (e) regenerating the isolated first reactor.

Fig. 1 illustrates one embodiment of a reactor sequential swing system according to the present invention;

Fig. 2 illustrates the embodiment shown in Fig. 1, with various valve on/off conditions when reactor 30 is in regenerator mode and reactors 40, 10 and 20 occupy the first, second and third process modes, respectively;

Fig. 3 illustrates another embodiment of a reactor sequential swing system according to the present invention; and

Fig. 4 illustrates the embodiment of Fig. 3 having various valve on/off conditions, such that reactor 30 is in regeneration mode and reactors 40, 10 and 20 are in process mode positions 1, 2 and 3, respectively.

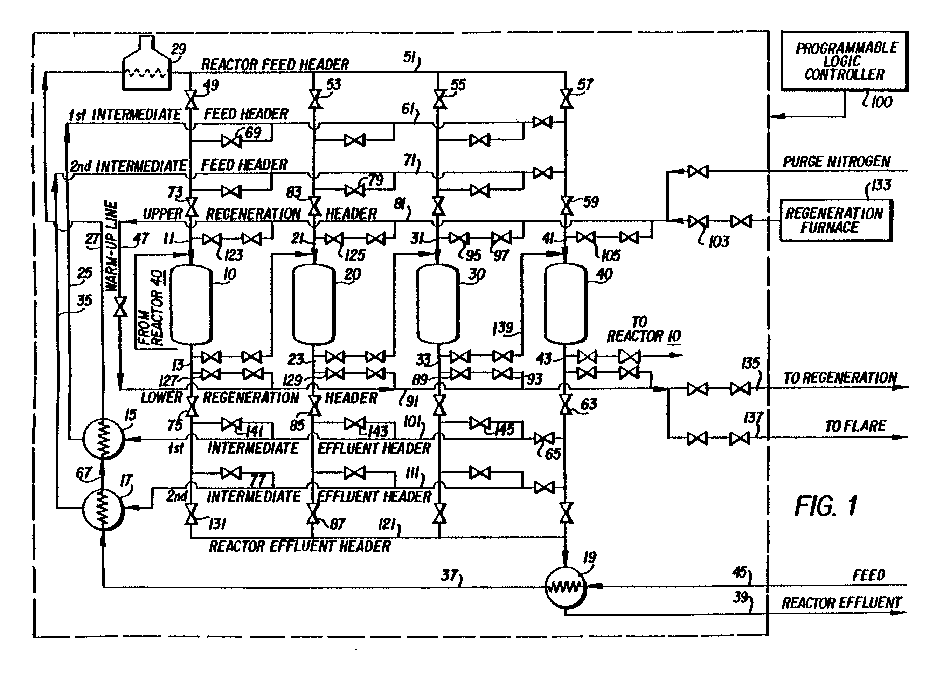

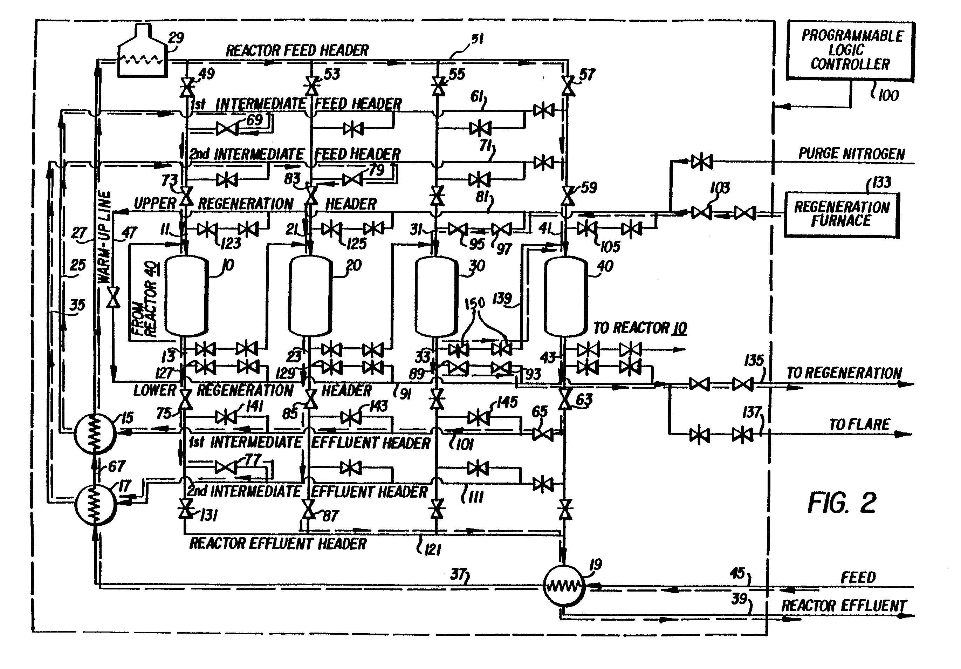

The present invention is directed to a method and apparatus for sequentially backwardly rotating a system of three or more series-connected reactors to allow the most fresh, or regenerated, catalyst to be the terminal reactor, i.e., in the last process flow position, i.e., the farthest downstream position, and the least active, or most aged, catalyst to be in the first process position, i.e., the farthest upstream position, with one reactor in the regeneration mode. If more than three reactors are used, the intermediate reactors assume process positions such that reactors with successively more active catalyst are in positions progressively farther downstream in the sequence. The reactors are sequentially backwardly rotated such that in successive cycles the reactors occupy process mode positions or a regeneration mode position, as illustrated in Table I below for an embodiment having four reactors. The reactor swings during process operation and regeneration for both embodiments shown in Figs. 1-4 are shown in Table I with the reactor reference numerals corresponding to those in Figs. 1 and 2.

TABLE 1

Reactor Sequencing

| Reactor in Positions: | Process Mode 1st | 2nd | 3rd | Regeneration Mode Reactor Undergoing Regeneration |
|---|---|---|---|---|
| Cycle 1 | 10 | 20 | 30 | 40 |
| Cycle 2 | 20 | 30 | 40 | 10 |
| Cycle 3 | 30 | 40 | 10 | 20 |
| Cycle 4 | 40 | 10 | 20 | 30 |

The figures show two illustrative embodiments of a reactor sequential swing system according to the present invention, including a system of reactors, piping manifold headers, valves, and a programmable logic controller which allows the catalyst in each reactor to be sequentially operated under two or more different process conditions and allows all reactors to be isolated for regeneration of the catalyst. The headers, valves and programmable logic controller provide apparatus for rapidly sequentially rotating the reactors and for isolating a reactor for regeneration without creating an unsafe condition in any reactor or the regeneration equipment arising from mixing of oxygen and hydrocarbons. This system is particularly applicable to the following processes: Olefins-to-gasoline and distillate (OGD), olefins-to-gasoline (OG), olefins-to-distillate (OD), methanol-to-olefins (MTO) and methanol-to-chemicals (MTC). In addition, the described apparatus is applicable to other processes requiring sequential or serial swinging of reactors.

In Figs. 1 and 2, four reactors 10, 20, 30, and 40, each having input lines 11, 21, 31 and 41 and output lines 13, 23, 33 and 43, respectively, are illustrated. Each input line is selectively connectable via a set of valves, e.g., valves 49, 69, 73 and 123 for reactor 10, under control of programmable logic controller 100 to a reactor feed header 51, a first intermediate feed header 61, a second intermediate feed header 71 and an upper regeneration header 81. Each output line is selectively connectable via a set of valves, e.g., valves 127, 75, 77 and 131 associated with reactor 10, under control of programmable logic controller 100 to a lower regeneration header 91, a first intermediate effluent header 101, a second intermediate effluent header 111 and a reactor effluent header 121. The valves can be manually operated valves or motor operated valves controlled by the programmable logic controller 100. Input lines 11, 21, 31 and 41 provide either feed or reactor effluent from upstream reactors to their associated reactors 10, 20, 30 and 40 when their associated reactor is in a process mode and provide a connection to regeneration furnace 133 to their associated reactors when they are in regeneration mode. Output lines 13, 23, 33 and 43 carry effluent from the reactors to the various headers 91, 101, 111 and 121 to which they are connected.

Heat exchangers 15 and 17 function to control reactor effluent temperature to provide a desired inlet temperature to the downstream reactors in the second and third process positions, respectively. Also, heat exchangers 15, 17 and 19 serve to heat the feed as it is being fed to trim heater 29, which finally adjusts the feed temperature to an appropriate inlet temperature for the reactor in the first process position. Accordingly, exchangers 15 and 17 cool their effluent input to an appropriate inlet temperature for the next reactor in the series, by means of heat exchange with the feed line. Exchanger 19 cools the reactor effluent from the reactor in the last process position prior to feeding this effluent to a fractionation unit (not shown). In the Fig. 1 embodiment, heat exchangers 15, 17 and 19 always remain in a fixed process position. Hence, exchanger 15 always receives reactor effluent along first intermediate effluent header 101 from the particular reactor which is least active and which currently occupies the first process position, i.e., the one farthest upstream. Similarly, exchanger 17 always receives reactor effluent along second intermediate header 111 from the reactor in the second process position and exchanger 19 always receives reactor effluent along reactor effluent header 121 from the most active reactor which occupies the third process position. Exchanger 19 also receives feed along line 45. The effluent output of exchanger 15 is provided along line 25 to first intermediate feed header 61 and its feed output along line 27 to reactor feed heater 29. Effluent output from exchanger 17 is provided along line 35 to second intermediate feed header 71 and its feed output directly along line 67 to exchanger 15. Feed output from exchanger 19 is fed along line 37 to exchanger 17, while reactor effluent is discharged to a distillation system along line 39. Heat exchangers 15, 17 and 19, and trim heater 29, function to adjust the inlet temperatures of the reactors as they are shifted backward in the process sequence to the temperature required for the specific process position of the particular reactor in the series which it will subsequently occupy.

The present multi-reactor system is capable of operating with a constant flow rate of hydrocarbon feed from a feed source. This is accomplished by progressively increasing the operation temperatures of the reactors currently in process modes, as their respective catalyst beds age, in order to maximize the useful life of the catalyst before regeneration is required. In other words, if one cycle lasts, for example, thirty days between rotation of reactors and before placing a new reactor in regeneration mode and bringing a newly regenerated reactor in process mode, the reactor system operation temperatures will be greater on, e.g., day twenty than on day five, because the catalyst age in all reactors on day twenty will be greater. It should be noted that as the operating temperatures are increased, the effluent temperatures will increase, although the temperature differential between the feed and the effluent will remain approximately the same. The farthest upstream heat exchanger will have a higher duty toward the end of the catalyst aging cycle. It also should be noted that while a particular cycle can last several days, regeneration generally takes a lesser amount of time, e.g., one or two days.

Warmup line 47 connects upper regeneration header 81 and lower regeneration header 91 in order to warm up the regeneration lines which, as seen from the above, likely have been idle for a period of time, prior to using them again in the next rotation sequence. The output of lower regeneration header 91 can be provided to regeneration along line 135 or to flare along line 137. Line 39 carries reactor effluent from the reactor in the last process mode position after this effluent has passed through heat exchanger 19.

Fig. 2 illustrates the various valve on/off conditions and also the process flow when reactor 30 is in the regeneration mode and reactors 40, 10 and 20 occupy the first, second and third process modes respectively, i.e., cycle 4 illustrated in Table I. As illustrated in Fig. 2, feed is provided along line 45 through heat exchangers 19, 17 and 15 and finally to reactor feed heater 29. The output of heater 29 is fed along reactor feed header 51 to reactor 40 which, in this cycle, contains least active catalyst and occupies process mode 1. In other words, closed valves 49, 53 and 55 block the output from heater 29 from passing to reactors 10, 20 and 30, respectively, while valves 57 and 59 are open, thus allowing passage to reactor 40. Reactor effluent from reactor 40 is passed via open valves 63 and 65 along first intermediate effluent header 101 to heat exchanger 15. Heat exchanger 15 then cools the effluent from reactor 40 before passing this effluent to first intermediate feed header 61. Header 61 supplies reactor 10 via open valves 69 and 73. Reactor 10 occupies process mode 2, and hence reactor effluent therefrom goes to exchanger 17, which cools the effluent, via open valves 75 and 77, and from there to second intermediate feed header 71. Header 71 in turn supplies reactor 20 via open valves 79 and 83. Effluent output from reactor 20 (which is most active and occupies process mode 3) passes via open valves 85 and 87 to reactor effluent header 121 and then into exchanger 19, where it is cooled before being fed to long reactor effluent line 39.

In the cycle shown in Fig. 2, all feed and effluent valves associated with reactor 30, which is in regeneration mode, are closed except regeneration valves 95, 97, 89 and 93 which allow free passage from regeneration furnace 133 through reactor 30, and finally to line 135 back to regeneration. Of course, similar open and closed states of the feed, effluent and regeneration valves associated with the sequential rectors can be created by programmable logic controller 100 in order to achieve each of the sequential reactor positions illustrated in Table I.

Illustrative process steps for placing a regenerated reactor onstream, moving the reactors through the successive operating positions, and removing a reactor for oxidative regeneration, are as follows for the Fig. 1 embodiment, assuming regeneration has just been completed in reactor 40. First, reactor 40 is depressurized and evacuated with an ejector and purged with nitrogen until oxygen content is below 1.0 volume percent and the catalyst temperature is lowered to the process temperature. The reactor is pressurized with a slip stream along line 139 from reactor 30 effluent after opening valves 150. Next, reactor 40 is brought onstream by means of the reactor sequential swing system opening appropriate valves and placing reactor 40 in parallel operation with reactor 30. At this point, effluent from reactor 20 is feeding both reactors 30 and 40. Reactor 30 is then isolated from the system by closing its feed and effluent valves. At this point, reactors 10, 20 and 40 are in process mode operation. Next, reactor 30 is brought into the second process mode position by placing it in parallel with reactor 20. At this point, both reactors 20 and 30 are fed by effluent from reactor 10. At this point, reactors 10, 30 and 40 are onstream in process operation. Next, reactor 20 is moved into the first process mode position by placing it in parallel with reactor 10. Both reactors 10 and 20 receive the charge or fresh feed from reactor feed header 51 via open valves 49, 73 and 53, 83, respectively. Subsequently, valves 49 and 73 are closed to isolate reactor 10 for regeneration. At this point, reactors 20, 30 and 40 are in process service. Isolated reactor 10 is depressurized, evacuated and purged with nitrogen until it is hydrocarbon free. The regeneration system double block valves 103 are then opened and reactor 10 is ready to undergo regeneration. Upon completion of the regeneration cycle, reactor 10 is then brought onstream by a similar sequence of steps to those described above. Reactors 30, 40 and 10 are then onstream, with isolated reactor 20 available for regeneration.

As reactors move backward in the process sequence, the inlet temperature thereto must be adjusted to that required for the specific position of the reactor in the train. This is accomplished by feed/reactor effluent heat exchangers 15, 17 and 19 and by reactor feed heater 29. As indicated above, heat exchangers 15, 17 and 19 always remain in fixed process positions, in the Figs. 1 and 2 embodiment. More particularly, reactor effluent from the reactor in the first process position always flows to exchanger 15, while effluent from the second position flows to exchanger 17 and that from the third position flows to exchanger 19. The swing of reactor effluent is accomplished simultaneously with the swing of the reactor in the process train by the reactor sequential swing system, by operation of programmable logic controller 100 opening and closing appropriate valves. In other words, first intermediate effluent header 101 always carries reactor effluent from the reactor in the first process position to heat exchanger 15, and the appropriate one of valves 141, 143, 145 and 65 is opened to accomplish this purpose. The heat exchangers are automatically isolated from a reactor while it is undergoing regeneration.

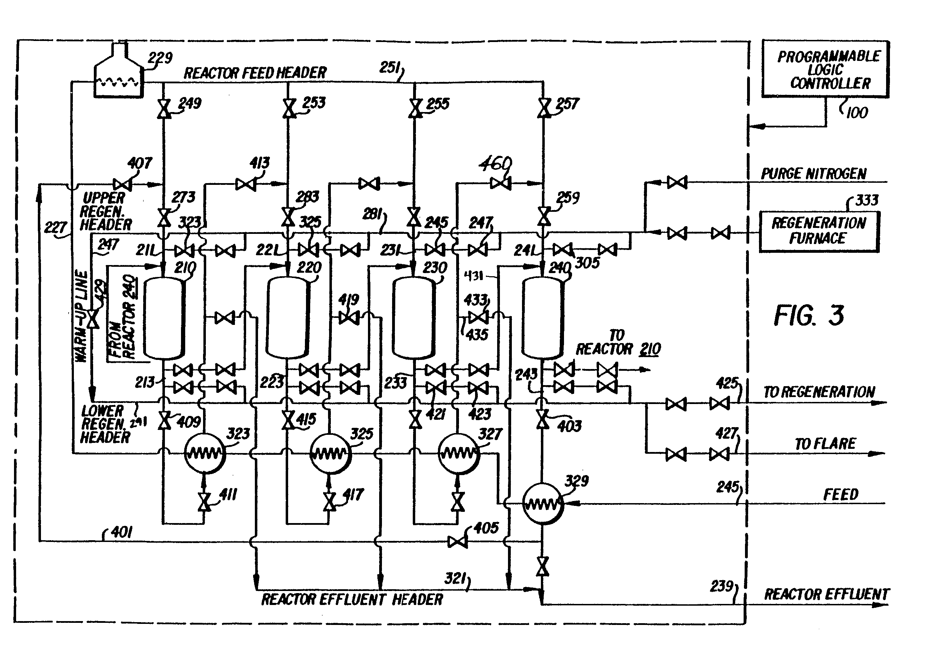

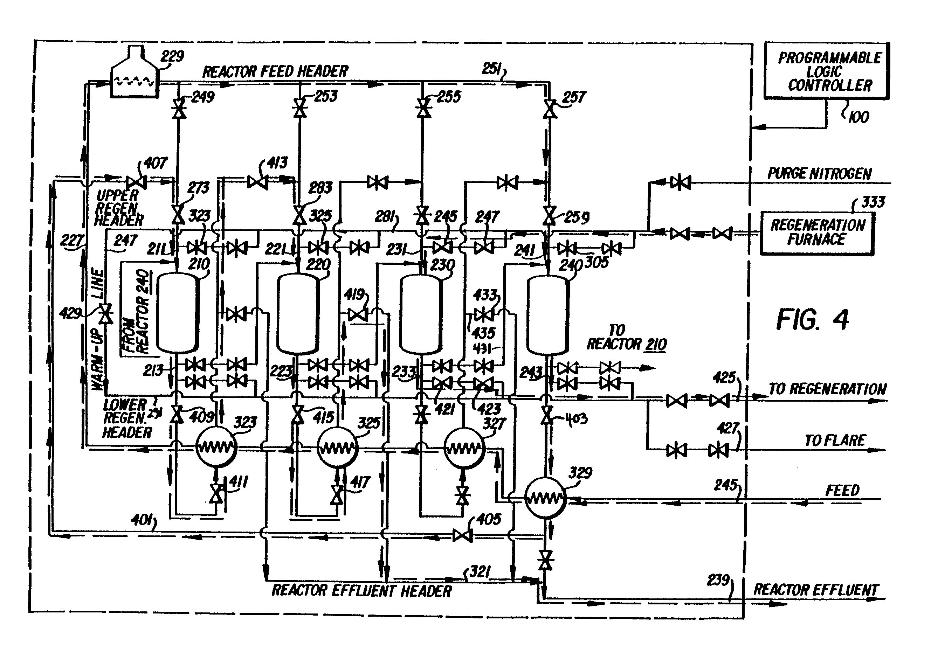

Figs. 3 and 4 illustrate a second embodiment of a reactor sequential swing system according to the present invention. The reactor rotation sequence is identical to that shown in Table I. However, although less valves are required than for the Figs. 1 and 2 embodiment, an additional heat exchanger is used. Because the exchangers rotate with the various reactor positions in the Figs. 3 and 4 embodiment, it should be noted that all heat exchangers are required to be sized accordng to the maximum sized exchanger of the system. For the Figs. 3 and 4 embodiment, the rotation procedure is somewhat less complex than for the previous embodiment. It should be noted that both embodiments are fully automatic, with the sequential rotation of reactors being accomplished without the necessity of stopping the system to switch the reactors to their next appropriate process mode positions or to regeneration mode. Instead, operation of the reactor is maintained while shifting of the reactors is being performed.

Fig. 4 illustrates reactor 230 in the regeneration mode and reactors 240, 210 and 220 in process mode positions 1, 2 and 3 respectively, i.e., cycle 4 shown in Table I. As illustrated, feed is provided along line 245 through heat exchangers 329, 327, 325 and 323 and finally along line 227 to reactor feed trim heater 229. The output of heater 229 is fed along reactor feed header 251 to reactor 240 only (which is least active and occupies process mode 1) because valves 249, 253 and 255 block the output of feed header 251 from passing to reactors 210, 220 and 230, respectively, while valves 257 and 259 are open, thus allowing this output to pass to reactor 240. Reactor effluent from reactor 240 is passed via open valves 403, 405, 407 and 273 to reactor 210 after passing through heat exchanger 329, which cools this effluent by heat exchange with the feed line. Effluent from reactor 210 then passes via output line 213 through open valves 409 and 411 through heat exchanger 323 and on through open valves 413 and 283 to input line 221 of reactor 220 which is operating in the last process mode. Effluent from reactor 220 then passes via output line 223 and open valves 415 and 417 to heat exchanger 325 (which similarly to exchanger 329 cools this effluent) and then through open valve 419 to reactor effluent header 321. The effluent then flows through header 321 to reactor effluent discharge line 231. All feed and effluent valves associated with reactor 230, which is in regeneration mode, are closed except regeneration valves 245, 247, 421, and 423, which allow input line 231 of reactor 230 to be connected to regeneration furnace 333 and output 233 of reactor 230 to be connected alternatively to line 425 which passes back into the regeneration system or, alternatively, line 427 which passes on to flare. Of course, similar open and closed states of the feed, effluent and regeneration valves of the various reactors can be created by the programmable logic controller in order to achieve each of the sequential reactor positions illustrated in Table I for the various cycles 1-4.

It should be noted that upper regeneration header 281 is connected by warmup line 247 via valve 429 to lower regeneration header 291. This warmup line performs the same function as the similar line in the Figs. 1 and 2 embodiment.

Illustrative process steps for sequencing the reactors shown in Figs. 3 and 4 are as follows, assuming regeneration has just been completed in reactor 240. First, reactor 240 is depressurized and evacuated with an ejector and purged with nitrogen until oxygen content is below 1.0 volume percent and the catalyst temperature is lowered to the process temperature. Reactor 240 is pressurized with a slipstream 431 from reactor 230 effluent. Next, reactor 240 is brought onstream by the reactor sequential swing system progammable logic controller 100 which opens valve 460 and divides the effluent from reactor 230 between reactor 240 and reactor effluent header 321 and downstream equipment. Then, valve 433 on reactor 230 effluent branch line 435 which leads to reactor effluent header 321 is closed, causing all flow from reactor 230 to go through reactor 240 and then out through reactor effluent line 239 to a separator (not shown). At this stage, all four reactors are onstream. Next, inlet valve 253 from feed header 251 to reactor 220 is opened causing feed to flow to both reactors 210 and 220. Then, feed is shut off to reactor 210 by closing valve 249. At this point, reactors 220, 230 and 240 are onstream and reactor 210 is available for regeneration. It should be noted that, in the embodiment illustrated in Figs. 3 and 4 unlike that of Figs. 1 and 2, the reactor feed/effluent exchangers 323, 325, 327 and 329 always rotate with the reactor. Similarly to the embodiment of Figs. 1 and 2, heat exchangers 323, 325, 327 and 329 cool the effluent coming from their respective associated reactors by heat exchange with the feed coming in along line 245, in order to control the inlet temperatures of the next reactor in the chain or, in the case of the last reactor, the effluent inlet temperature to a fractionation tower (not shown).

With respect to OGD, OG, OD and TC processes, the reactions are exothermic, and inter-reactor cooling is preferably accomplished by feed preheat. However, inter-reactor cooling may also be done by water cooling, circulating molten salt, steam generation, air cooling or preheating another stream. In an endothermic process, the exchangers could exchange heat to the feedstream by steam heating, circulating either molten salt, hot liquids or gases or using furnaces to heat the feed.

Although the above-described embodiments relate to four-reactor systems, three, five, six or more reactors may be used in a sequential apparatus system according to the present invention. Motor operated valves, e.g., electric, air, hydraulic and so on, actuated by programmable logic controller 100, are preferably used, although all valve operations could be manual. Isolation of a reactor for regeneration is preferably performed using conventional double block valves with bleed valve technology.

## Claims

1. A method of sequentially backwardly rotating at least three reactors, such that in each cycle the reactors are positioned so that one reactor operates in regeneration mode while other reactors operate in serial process mode, characterized by:

(a) initiating a new cycle by placing a reactor with regenerated catalyst in a last process position of a train of at least two reactors operating in series flow such that the reactor with regenerated catalyst is in parallel with a reactor which in an immediately preceding cycle occupied the last process position alone;

(b) isolating from the process the reactor which in the preceding cycle occupied the last process position;

(c) placing the isolated reactor in parallel with a reactor which in the preceding cycle occupied an adjacent upstream process position to the last process position;

(d) isolating from the process the reactor which in the immediately preceding cycle occupied the adjacent upstream process position;

(e) regenerating the reactor isolated in step (d) provided that the adjacent downstream position of the reactor isolated in step (d) is a first process position; and

(f) sequentially placing the reactor isolated in step (b) in parallel operation with the reactor which in an immediately preceding cycle occupied an adjacent upstream process position to the last process position and isolating from the process the reactor which in the immediately preceding cycle occupied the adjacent upstream position provided that the adjacent upstream position of the reactor isolated in step (d) is an intermediate process position.

2. A method of sequentially backwardly rotating at least three reactors, such that in each sequence or cycle the reactors are positioned so that one reactor is in regeneration mode while other reactors operate in serial process mode, characterized by:

(a) placing a reactor with regenerated catalyst in a last process position of a train of at least two reactors operating in series such that the reactor with regenerated catalyst is in parallel with a reactor which in an immediately preceding cycle was the terminal reactor;

(b) isolating from the process the terminal reactor;

(c) sequentially placing adjacent downstream reactors in parallel operation with adjacent upstream reactors and isolating the adjacent upstream reactors until an adjacent upstream reactor is encountered which was the first reactor in the preceding cycle;

(d) isolating from the process the first reactor; and

(e) regenerating the isolated first reactor.

# FIG. 1

REACTOR FEED HEADER

PROGRAMMABLE LOGIC CONTROLLER — 100

1st INTERMEDIATE FEED HEADER

2nd INTERMEDIATE FEED HEADER

PURGE NITROGEN

REGENERATION FURNACE — 133

UPPER REGENERATION HEADER

WARM-UP LINE

FROM REACTOR 40

TO REACTOR 10

LOWER REGENERATION HEADER

TO REGENERATION

1st INTERMEDIATE EFFLUENT HEADER

TO FLARE

2nd INTERMEDIATE EFFLUENT HEADER

REACTOR EFFLUENT HEADER

FEED

REACTOR EFFLUENT

Reference numerals: 10, 11, 13, 15, 17, 19, 20, 21, 23, 25, 27, 29, 30, 31, 33, 35, 37, 39, 40, 41, 43, 45, 47, 49, 51, 53, 55, 57, 59, 61, 63, 65, 67, 69, 71, 73, 75, 77, 79, 81, 83, 85, 87, 89, 91, 93, 95, 97, 100, 101, 103, 105, 111, 121, 123, 125, 127, 129, 131, 133, 135, 137, 139, 141, 143, 145

0 186 474

PROGRAMMABLE LOGIC CONTROLLER 100

PURGE NITROGEN

REGENERATION FURNACE 133

TO REGENERATION

TO FLARE

FIG. 2

FEED

REACTOR EFFLUENT

TO REACTOR 10

FROM REACTOR 40

REACTOR FEED HEADER

1st INTERMEDIATE FEED HEADER

2nd INTERMEDIATE FEED HEADER

UPPER REGENERATION HEADER

LOWER REGENERATION HEADER

1st INTERMEDIATE EFFLUENT HEADER

2nd INTERMEDIATE EFFLUENT HEADER

REACTOR EFFLUENT HEADER

WARM-UP LINE

FIG. 3

FIG. 4